# EUROPEAN PATENT SPECIFICATION

(11) **EP 2 677 779 B1**
(45) Date of publication and mention of the grant of the patent: **08.10.2014**
(21) Application number: 13171175.6
(22) Date of filing: 10.06.2013
(51) Int. Cl.: H04W 4/02

(54) **Mobile terminal, server and method for controlling the same**
Mobiles Endgerät, Server und Verfahren zur Steuerung davon
Terminal mobile, serveur et procédé de commande de celui-ci

(30) Priority: 20.06.2012 KR 20120066020
(43) Date of publication of application: 25.12.2013
(73) Proprietor: LG Electronics Inc., Yeongdeungpo-gu Seoul 150-721 (KR)
(72) Inventor: Jung, Sanghune, 153-801 Seoul (KR)
(74) Representative: Urner, Peter

(56) References cited:
- US-A1- 2010 229 082
- US-A1- 2011 314 084
- US-A1- 2012 042 036

## Description

### CROSS-REFERENCE TO RELATED APPLICATIONS

This application claims the benefit of earlier filing date and right of priority to Korean Patent Application No. 10-2012-0066020, filed on June 20, 2012.

### BACKGROUND OF THE INVENTION

### Field of the Invention

The present invention relates to a mobile terminal, a server, a system, and a method for controlling the mobile terminal and the server.

### Discussion of the Related Art

US 2012/0042036 A1 discloses an apparatus and a method for selecting applications for a mobile device using context data describing the current environment of the mobile device. The disclosed method allows mobile device users to discover applications for a mobile device using contact information describing the current environment of the mobile device, including location, time, and user data, such as user calendar information.

US 2010/0229082 A1 discloses a system and a method of creating a dynamic context-data tag cloud for a mobile device. The mobile device has a context-data component, which manages the acquisition of context-data from at least one of several sensors of the device. The type of sensors employed are for example position sensors, thermometers, digital cameras, biosensors and so on. Context data can include context data from a user, e.g. biometric data, user movement, user, input, user behavior, user voice etc. This context-data is transmitted to a context-data server. The context-data server generates a context-data tag or context-data tag cloud that represents the context-data and renders the same to the mobile device.

US 2011/0314084 A1 relates to systems that automatically and continuously find and aggregate the most relevant and current information about people and things that a user cares about. The information gathered is based on a current context of the user which includes location of the user, actions taken by the user, or based on voice or written input by the user. This context information is sent to a cloud, which based on this information automatically and continuously finds and aggregates the most relevant and current information based on the current context and reports that information to the user.

In general, a cloud computing environment refers to such an environment where computing resources are delivered as a service and users of the cloud computing environment connected to a cloud server can perform their tasks using simple types of terminals.

Cloud computing also allows the user to connect to the computing resources by using a low-cost PC; obviates management of PC such as purchasing software programs for personal use and data storage; and allows the user to use a server computer most relevant to the current operating program without considering technical specifications such as memory, CPU, disc capacity, and auxiliary devices.

Meanwhile, N-screen refers to a service allowing seamless use of the same contents in various devices such as a TV, PC, tablet PC, and smart phone. Since the contents purchased by the user are stored in a server rather than a terminal, the user can make use of the contents in various devices whenever the user wants to.

If the user environment information acquired through the N-screen devices is utilized for providing services in the cloud computing environment, the N-screen devices can provide a lot more contents for the users, tailored to the current user context.

### SUMMARY OF THE INVENTION

An object of the present invention is to provide a mobile terminal, a server, a system, and a method for controlling the mobile terminal and the server capable of providing context-aware services to at least one terminal operating in the N-screen environment by utilizing cloud computing services. The objects are solved by the subject-matter of the independent claims.

In particular, the present invention provides a mobile terminal, a server, a system, and a method for controlling the mobile terminal and the server capable of providing user specific services to at least one terminal operating in the N-screen environment based on user context information obtained by a cloud server.

A mobile terminal according to one aspect of the present invention includes a context information capture unit; and a controller transferring context information obtained through the context information capture unit to a cloud server and receiving from the cloud server a service corresponding to the user context recognized based on the context information. The controller, when receiving an input changing at least one service item included in the list of services, transfers changed service list to the server and based on the changed service list, control predetermined services to be provided to the mobile terminal and the at least one external device.

The context information capture unit includes at least one of a camera, a sensor, an SNS application, a voice recognition module, and a user profile.

The context information can include at least one of facial expression of the user obtained through the camera, a temperature of at least one part of the user's body obtained through the temperature sensor, messages communicated through the SNS application, voice recognition keywords obtained through the voice recognition module, pitch, and information about a change of the user profile.

The mobile terminal can further include a communication unit forming a network with at least one external device, where the controller can monitor the context information transferred by the at least one external device to the server and store the context information transferred by the external device in a database.

The controller can store in the database a list of services in the order of priorities of the respective services provided to the mobile terminal and the at least one external service provided through the server.

The controller, when the mobile terminal's being configured for a feedback function to evaluate user satisfaction, can transfer to the server evaluation information about the satisfaction and request a service of lower priority according to the evaluation information.

The service corresponding to the user context can include at least one of contents recommendation based on the user context and theme change of the mobile terminal.

A server according to another aspect of the present invention includes a communication unit; a database storing context information received from a mobile terminal through the communication unit; a context inference unit inferring user context from context information stored in the database; and a controller selecting at least one service to be provided according to the user context to the mobile terminal and at least one external device connected to the mobile terminal through a predetermined network and transferring services provided by content providers to the mobile terminal.

The controller, if the mobile terminal is connected to at least one electronic device through a predetermined network, can transfer the service to the mobile terminal and the at least one electronic device.

The database can combine an emotion and location of the user and time information at which context information is captured into a set and store the set by mapping the set into the corresponding theme.

By analyzing context information received from the mobile terminal, the context inference unit can infer emotion information of the user stored in the database and the controller can transfer a service related to a theme corresponding to the inferred user emotion to the mobile terminal and the at least one electronic device.

A system according to yet another aspect of the present invention includes a mobile terminal obtaining context information; and a cloud server receiving the context information from the mobile terminal, inferring user context from the context information, and providing the mobile terminal with a service corresponding to the user context based on the inferred context information. The cloud server may include a database combining emotion and location of the user and time information at which context information is captured into a set and storing the set by mapping the set into the corresponding theme; and provide the mobile terminal with a service related to the user's emotion from among the inferred context information included in the database.

The mobile terminal is connected to at least one external device through a network and the cloud server can transfer a service corresponding to the at least one external device based on the user context.

A control method of a mobile terminal according to still another aspect of the present invention includes obtaining context information; transferring obtained context information to a cloud server; and receiving from the cloud server a service corresponding to user context recognized based on the context information.

A control method of a server according to further aspect of the present invention includes receiving context information; inferring user context from the context information; selecting according to inferred user context at least one service to be provided to a motile terminal and at least one external device connected to the mobile terminal through a predetermined network; requesting the selected service from a content provider; and transferring a service received from the content provider to the mobile terminal.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The accompanying drawings, which are included to provide a further understanding of described embodiments of the present invention and are incorporated in and constitute a part of this specification, illustrate embodiments of the present invention and together with the description serve to explain aspects and features of the present invention.
FIG. 1 is an overview illustrating a system structure related to one embodiment of the present invention;
FIG. 2 is a block diagram illustrating an environment where context information is captured in the system of FIG. 1;
FIG. 3 is a block diagram of a mobile terminal according to an embodiment of the invention.
FIG. 4 is a flow diagram of a control method of a mobile terminal according to a first embodiment of the present invention;
FIG. 5 is a flow diagram of operation of a mobile terminal illustrating the first embodiment in more detail;
FIG. 6 illustrates functional blocks of a mobile terminal for implementing the first embodiment;
FIG. 7 is an example of context payload generated in a mobile terminal according to the first embodiment of the present invention;
FIG. 8 is a flow diagram of a control method for a server according to a second embodiment of the present invention;
FIG. 9 illustrates function blocks of a server for implementing the second embodiment;
FIG. 10 is a content mapping list obtained from the content provider shown in FIG. 1, representing a list of services in the order of priorities provided to terminals of N-screen environment;
FIG. 11 is a system environment for illustrating a third embodiment of the present invention;
FIG. 12 is a flow diagram of a control method of a mobile terminal according to the third embodiment of the present invention;
FIGS. 13 to 18 are drawings introduced to illustrate the third embodiment of the present invention;
FIG. 19 is a system environment for illustrating a fourth embodiment of the present invention;
FIGS. 20 to 21 are drawings introduced to illustrate the fourth embodiment of the present invention; and
FIGS. 22 to 23 illustrate a service providing method of a cloud server for embodiments of the present invention through specific context awareness.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

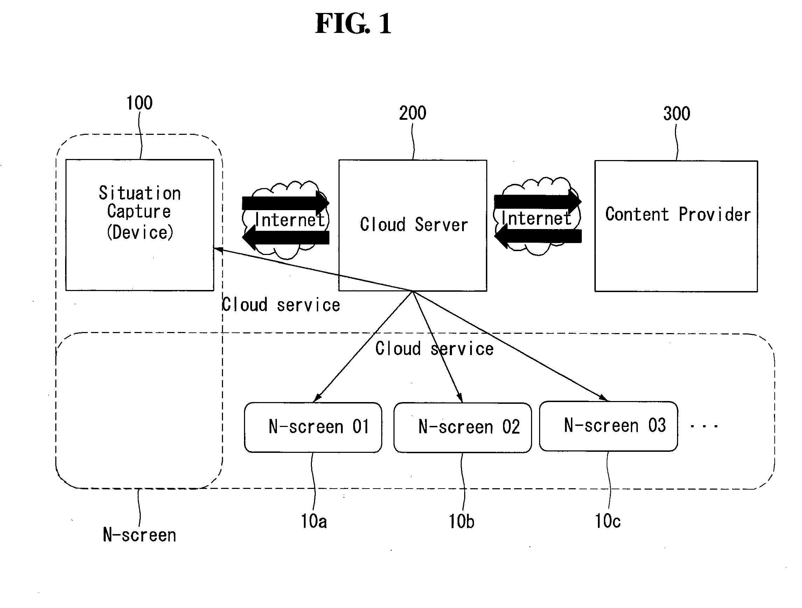

FIG. 1 illustrates a system structure related to one embodiment of the present invention. With reference to FIG. 1, a system according to one embodiment of the present invention includes a mobile terminal 100, a cloud server 200, and at least one external device 10a, 10b, 10c connected to a content provider and the mobile terminal 100 through an N-screen.

The mobile terminal 100 can obtain context information and transfer the information to the cloud server 200. The context information refers to the information describing attributes of a situation such as people, places, objects, and time affecting interaction between users or applications of a system and devices in association with ubiquitous computing; more specifically, the context information may be divided into computing context containing network connection state, communication bandwidth, display, and workstation; user context containing location and nearby people; physical context containing lighting, noise level, traffic, temperature, and so on; and time context containing time, week, month, and season. The context information can be captured by a system using various sensing devices and applications; and used for providing various kinds of application services. Also, particular context information can be used for deriving a third conclusion in conjunction with other pieces of context information.

In what follows, embodiments of the present invention are described based on user context from among the context information. The cloud server 200 stores context information received from the mobile terminal 100, recognizes a user context by analyzing the context information, and requests a service according to the recognized user context (e.g., contents) from the content provider 300.

A cloud service refers to the service through which the user can access his or her contents freely by using any device including a mobile terminal or TV while storing the user contents of media files such as movie, photo, and music files, documents, contact addresses, and so on in a server. A cloud server 200 refers to the server connected to the mobile terminal 100 through the Internet for implementing the cloud service.

The content provider 300 transfers contents relevant to the user context to the cloud server 200 according to a request of the cloud server 200. Further, the cloud server 200 can transfer the contents provided by the content provider 300 to the mobile terminal 100 and at least one external device 10a, 10b, 10c connected to the mobile terminal 100 through a predetermined network.

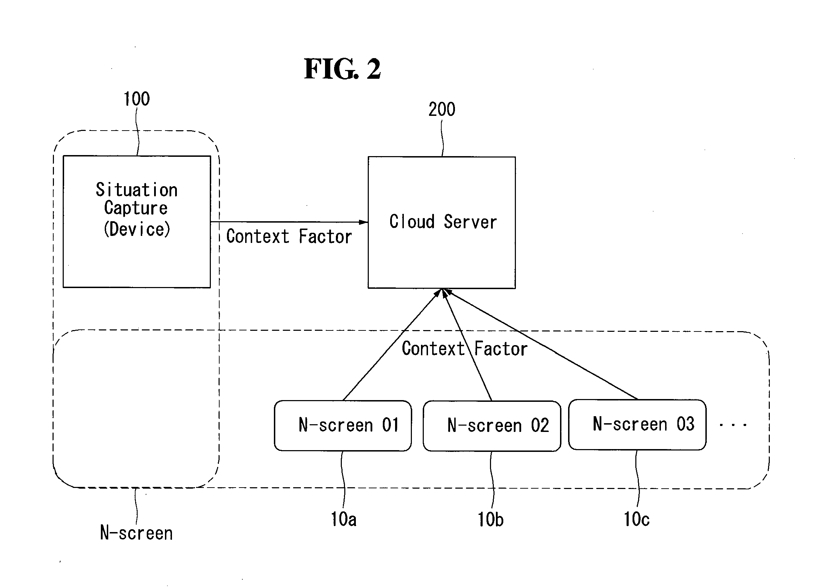

Next, FIG. 2 is an overview illustrating an environment where context information is captured in the system of FIG. 1. In addition, the context information capture unit can include at least one of a camera, a sensor, an SNS application, a voice recognition module, and a user profile.

Context information obtained through the context information capture unit may correspond to the user's facial expression obtained through the camera. Context information obtained through the sensor (e.g., a temperature sensor) may correspond to the temperature of one part of the user's body. Also, context information obtained through the SNS application may correspond to messages communicated through the SNS application. Context information obtained through the voice recognition module may include at least one of voice recognition keywords, pitch, and information about change of the user profile.

Meanwhile, the context information may be obtained not only through the mobile terminal 100 but also through at least one external device 10a, 10b, 10c connected to the mobile terminal 100 through an N-screen.

Further, the mobile terminal 100 can monitor the context information captured by the external device 10a, 10b, 10c and transferred to the cloud server 200. Meanwhile, the mobile terminal 100 can manage context information transferred from the external device 10a, 10b, 10c to the cloud server 200 in an integrated manner. Also, the mobile terminal 100, by adding an N-screen device, can diversify the context information transferred to the cloud server 200.

According to one embodiment of the present invention, context information obtained by the mobile terminal 100 and at least one external device 10a, 10b, 10c connected to the mobile terminal 100 through an N-screen can be stored in the cloud server 200 in an integrated manner and the cloud server 200, by recognizing user context based on the context information, can provide contents relevant to the user context for the mobile terminal 100 and/or the at least one external device 10a, 10b, 10c connected to the mobile terminal 100 through N-screen.

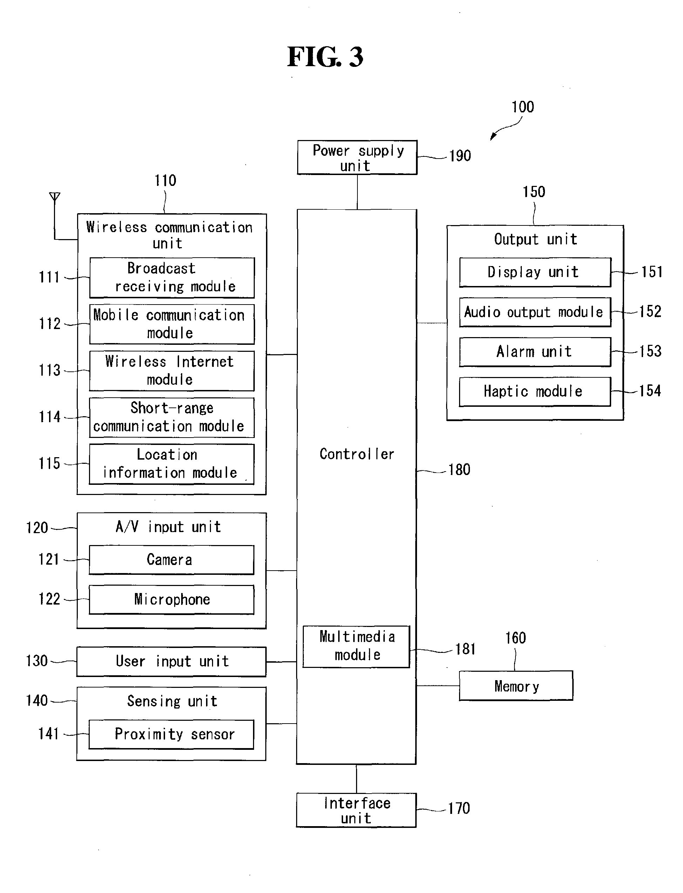

Referring to FIG. 3, the mobile terminal 100, as an example of the electronic device 100 related to this invention, is described in detail with reference to the accompanying drawings. In particular, FIG. 3 is a block diagram of the mobile terminal according to an embodiment of this invention. As used herein, the suffixes 'module' and 'unit' are used for elements in order to facilitate the disclosure only. Therefore, significant meanings or roles are not given to the suffixes themselves and it is understood that the 'module' and 'unit' can be used together or interchangeably.

Referring to FIG. 3, the mobile terminal 100 includes a wireless communication unit 110, an audio/video (A/V) input unit 120, a user input unit 130, a sensing unit 140, an output unit 150, a memory 160, an interface unit 170, a controller 180, and a power supply unit 190. Although FIG. 1 shows the mobile terminal 100 having various components, all of the illustrated components is not a requirement. More or fewer components may alternatively be implemented.

The wireless communication unit 110 includes one or more components that permit wireless communication between the mobile terminal 100 and a wireless communication system or a network within which the mobile terminal 100 is located. For example, the wireless communication unit 110 includes a broadcast receiving module 111, a mobile communication module 112, a wireless Internet module 113, a short-range communication module 114 and a position-location module 115. For non-mobile terminals, the wireless communication unit 110 may be replaced with a wired communication unit. The wireless communication unit 110 and the wired communication unit may be commonly referred to as a communication unit.

The broadcast receiving module 111 receives a broadcast signal and/or broadcast associated information from an external broadcast managing entity via a broadcast channel. The broadcast channel may include a satellite channel and/or a terrestrial channel.

The broadcast managing entity may refer to a system that transmits a broadcast signal and/or broadcast associated information. The broadcast managing entity may be a server that generates and transmits broadcast signals and/or broadcast associated information or a server for receiving previously generated broadcast signals and/or broadcast-related information and transmitting the broadcast signals and/or the broadcast associated information to the mobile terminal 100. The broadcast signals may include not only TV broadcast signals, radio broadcast signals, and data broadcast signals, but also signals in the form of a TV broadcast signal combined with a radio broadcast signal.

The broadcast associated information may be information about a broadcast channel, a broadcast program, or a broadcast service provider. The broadcast associated information may even be provided over a mobile communication network. In the latter case, the broadcast associated information may be received via the mobile communication module 112. Examples of broadcast associated information include an electronic program guide (EPG) of digital multimedia broadcasting (DMB) and an electronic service guide (ESG) of digital video broadcast-handheld (DVB-H).

The broadcast receiving module 111 may receive broadcast signals transmitted from various types of broadcast systems. As a non-limiting example, the broadcast systems include digital multimedia broadcasting-terrestrial (DMB-T), digital multimedia broadcasting-satellite (DMB-S), digital video broadcast-handheld (DVB-H), a data broadcasting system known as media forward link only (MediaFLO®) and integrated services digital broadcast-terrestrial (ISDB-T). The broadcast receiving module 111 may also receive multicast signals. The broadcast signals and/or the broadcast associated information received by the broadcast receiving module 111 may be stored in a suitable storage device, such as in the memory 160.

The mobile communication module 112 transmits/receives wireless signals to/from at least one of a base station, an external terminal or a server over a mobile communication network. The wireless signals may represent, for example, voice call signals, video telephony call signals or data in various forms according to the transmission/reception of text and/or multimedia messages.

The wireless Internet module 113 supports Internet access for the mobile terminal 100. This wireless Internet module 113 may be internally or externally coupled to the mobile terminal 100. Suitable technologies for wireless Internet include, but are not limited to, WLAN (Wireless LAN), Wi-Fi®, Wibro® (Wireless broadband), Wimax® (World Interoperability for Microwave Access), and HSDPA (High Speed Downlink Packet Access). The wireless Internet module 113 may be replaced with a wired Internet module in non-mobile terminals. The wireless Internet module 113 and the wired Internet module may be commonly referred to as an Internet module.

The short-range communication module 114 facilitates relatively short-range communications. Suitable technologies for short-range communication include, but are not limited to, radio frequency identification (RFID), infrared data association (IrDA), ultrawideband (UWB), as well as networking technologies such as Bluetooth® and ZigBee®.

The position-location module 115 identifies or otherwise obtains a location of the mobile terminal 100. The position-location module 115 may obtain position information by using a global navigation satellite system (GNSS). The GNSS is a term used to describe radio navigation satellite systems configured to send reference signals capable of determining their positions on the surface of the earth or near the surface of the earth while revolving around the earth. The GNSS includes: a global position system (GPS) operated by the U.S.A.; Galileo, operated by Europe; a global orbiting navigational satellite system (GLONASS) operated by Russia; COMPASS, operated by China; and a quasi-zenith satellite system (QZSS) operated by Japan.

As a typical example of the GNSS, the position-location module 115 is a GPS module. The position-location module 115 may calculate information related to distances between one point or object and at least three satellites and information related to the time when the distance information was measured and apply trigonometry to the obtained distance information to obtain three-dimensional position information on the point or object according to the latitude, longitude, and altitude at a predetermined time.

Furthermore, a method of calculating position and time information using three satellites and correcting the calculated position and time information using another satellite may also used. The position-location module 115 continues to calculate a current position in real time and to calculate velocity information based on the position information.

With continued reference to FIG. 3, the audio/video (A/V) input unit 120 may be configured to provide audio or video signal input to the mobile terminal 100. The A/V input unit 120 may include a camera 121 and a microphone 122. The camera 121 processes image frames of still pictures or video obtained by an image sensor in a photographing mode or a video telephony mode. The processed image frames may be displayed on a display unit 151.

The image frames processed by the camera 121 may be stored in the memory 160 or transmitted to an external device through the wireless communication unit 110. Optionally, the mobile terminal 100 can include two or more cameras 121, if appropriate.

The microphone 122 receives an external audio signal while the mobile terminal 100 is in a particular mode, such as a phone call mode, a recording mode and/or a voice recognition mode. The received audio signal is processed and converted into digital data. In the call mode, the processed digital data is transformed into a format transmittable to a mobile communication base station via the mobile communication module 112 and then output. Furthermore, the mobile terminal 100, and in particular the A/V input unit 120, may include a noise removing algorithm to remove noise generated in the course of receiving the external audio signal.

The user input unit 130 generates input data in response to user manipulation of an associated input device or devices. Examples of such devices include a keypad, a dome switch, a touchpad (e.g., static pressure/capacitance), a jog wheel and a jog switch. A specific example of the user input unit 130 is a touch screen in which a touchpad is combined with a display, as will be described below.

The sensing unit 140 provides status measurements of various aspects of the mobile terminal 100. For example, the sensing unit 140 may detect an open/closed status of the mobile terminal 100, relative positioning of components (e.g., a display and a keypad) of the mobile terminal 100, a change of position of the mobile terminal 100 or a component of the mobile terminal 100, a presence or absence of user contact with the mobile terminal 100, an orientation of the mobile terminal 100 and/or acceleration/deceleration of the mobile terminal 100.

As an example, the mobile terminal 100 may be configured as a slide-type mobile terminal in which the sensing unit 140 may sense whether a sliding portion of the mobile terminal 100 is open or closed. The sensing unit 140 may also sense presence or absence of power provided by the power supply unit 190 or the presence or absence of a coupling or other connection between the interface unit 170 and an external device.

The output unit 150 generates output relevant to the senses of sight, hearing and touch. The output unit 150 may include a display unit 151, an audio output module 152, an alarm 153, and a haptic module 154.

The display unit 151 displays information processed by the mobile terminal 100. For example, when the mobile terminal 100 is in a call mode, the display unit 151 may display a user interface (UI) or a graphic user interface (GUI) associated with the call. If the mobile terminal 100 is in a video communication mode or a photograph mode, the display unit 151 may display a photographed and/or received picture, a UI or a GUI.

The display unit 151 may include a liquid crystal display (LCD), a thin film transistor liquid crystal display (TFT LCD), an organic light-emitting diode (OLED), a flexible display, or a 3-dimensional display. The mobile terminal 100 may include one or more of such displays

The display unit 151 may have a transparent or light-transmittive type configuration, hereinafter referred to as a transparent display. A transparent OLED (TOLED) is an example of a transparent display. A rear configuration of the display unit 151 may also have the light-transmittive type configuration. In this configuration, a user is able to see an object located behind the terminal body via the area occupied by the display unit 151 of the terminal body.

At least two display units 151 may be provided. For example, a plurality of display units 151 may be provided on a single face of the mobile terminal 100 spaced apart from each other or built in one body. Alternatively, each of a plurality of display units 151 may be provided on different faces of the mobile terminal 100.

If the display unit 151 and a sensor for detecting a touch action (hereafter referred to as a 'touch sensor') are constructed in a mutual-layered structure (hereafter referred to as a 'touch screen'), the display unit 151 may be used as an input device and an output device. For example, the touch sensor may include a touch film, a touch sheet or a touchpad.

The touch sensor can be configured to convert a pressure applied to a specific portion of the display unit 151 or a variation of electrostatic capacity generated from a specific portion of the display unit 151 to an electric input signal. The touch sensor may detect a pressure of a touch as well as a touched position or magnitude of the touch.

If a touch input is made to the touch sensor, a signal(s) corresponding to the touch input is transferred to a touch controller (not shown). The touch controller processes the signal(s) and then transfers corresponding data to the controller 180. The controller 180 may determine, therefore, which portion of the display unit 151 is touched.

With continued reference to FIG. 3, a proximity sensor 141 can be provided within the mobile terminal 100 enclosed by the touch screen or around the touch screen. The proximity sensor 141 may detect a presence or non-presence of an object approaching a specific detecting surface or an object existing around the proximity sensor 141 using an electromagnetic field strength or infrared ray without mechanical contact. Accordingly, the proximity sensor 141 may have greater durability and greater utility than a contact type sensor.

The proximity sensor 141 can include a transmittive photoelectric sensor, a direct reflective photoelectric sensor, a mirror reflective photoelectric sensor, a radio frequency oscillation proximity sensor, an electrostatic capacity proximity sensor, a magnetic proximity sensor or an infrared proximity sensor. If the touch screen is an electrostatic type touch screen, the proximity sensor 141 may detect proximity of a pointer using a variation of an electric field according to the proximity of the pointer and the touch screen (touch sensor) may be classified as the proximity sensor 141.

An action in which a pointer approaches the touch screen without contacting the touch screen, yet is recognized as being located on the touch screen, is referred to as a 'proximity touch'. An action in which the pointer actually touches the touch screen is referred to as a 'contact touch'. The position on the touch screen proximity-touched by the pointer refers to the position of the pointer that vertically opposes the touch screen when the pointer performs the proximity touch.

The proximity sensor 141 may detect a proximity touch and/or a proximity touch pattern (e.g., proximity touch distance, proximity touch duration, proximity touch position, proximity touch shift state). Information corresponding to the detected proximity touch action and/or the detected proximity touch pattern may be displayed on the touch screen.

The controller 180 (FIG. 3) recognizes the proximity touch as one of various input signals according to proximity depth and position of the pointer. The controller 180 performs various operation controls according to various input signals.

Referring again to FIG. 3, the audio output module 152 may output audio data that is received from the wireless communication unit 110 in, for example, a call-receiving mode, a call-placing mode, a recording mode, a voice recognition mode or a broadcast receiving mode. The audio output module 152 may output audio data stored in the memory 160. The audio output module 152 may output an audio signal relevant to a function (e.g., a call signal receiving sound, a message receiving sound, etc.) performed by the mobile terminal 100. The audio output module 152 may include, for example, a receiver, a speaker or a buzzer.

The alarm 153 outputs a signal for announcing an occurrence of a particular event associated with the mobile terminal 100. Typical events include a call signal reception, a message reception, a key signal input and a touch input. The alarm 153 outputs a signal for announcing the event occurrence via vibration as well as a video signal or an audio signal. The video signal is output via the display unit 151 and the audio signal is output via the audio output module 152. Hence, at least the display unit 151 or the audio output module 152 can be regarded as part of the alarm 153.

The haptic module 154 may generate various haptic effects that can be sensed by a user. Vibration is a representative tactile effect generated by the haptic module 154. Strength and pattern of the vibration generated from the haptic module 154 may be controllable. For example, vibrations differing from each other can be output by being synthesized together or can be output in sequence.

The haptic module 154 may generate various haptic effects in addition to vibration. For example, the haptic module 154 may generate an effect caused by a pin array vertically moving against skin being touched, an air injection force via an injection hole, an air suction force via a suction hole, an effect of skimming on a skin surface, an effect of contact with an electrode, an effect of electrostatic power and/or an effect of a hot/cold sense using an endothermic or exothermic device.

The haptic module 154 can be configured to provide the haptic effect via direct contact. The haptic module 154 can also be configured to enable a user to experience the haptic effect via muscular sense of a finger or an arm. Two or more haptic modules 154 can be provided according to a configuration of the mobile terminal 100.

The memory 160 is configured to store programs for operation of the controller 180. The memory 160 may temporarily store input/output data (e.g., phonebook, message, still picture, moving picture, etc.). The memory 160 may store data of vibration and sound in various patterns output when the touch screen receives a touch input.

The memory 160 may include, for example, a flash memory, a hard disk, a multimedia card micro type memory, a card type memory (e.g., SD memory, XD memory, etc.), a random access memory (RAM), a static random access memory (SRAM), a read-only memory (ROM), an electrically erasable programmable read-only memory (EEPROM), a programmable read-only memory(PROM), a magnetic memory, a magnetic disk or an optical disk. The mobile terminal 100 may operate in association with a web storage that performs a storage function of the memory 160 via the Internet.

The interface unit 170 couples the mobile terminal 100 with external devices. The interface unit 170 receives data from an external device. The interface unit 170 is supplied with power and may be configured to deliver the power to elements within the mobile terminal 100. The interface unit 170 may be configured to enable data to be transferred from the mobile terminal 100 to an external device. The interface unit 170 may be configured to include a wired/wireless headset port, an external charger port, a wire/wireless data port, a memory card port, a port for coupling to a device having an identity module, an audio input/output (I/O) port, a video input/output (I/O) port or an earphone port.

The identity module is a chip or card that stores various types of information for authenticating a use authority of the mobile terminal 100 and can include a user identity module (UIM), a subscriber identity module (SIM) and/or a universal subscriber identity module (USIM). A device provided with the above identity module (hereafter referred to as an 'identity device') may be manufactured in the form of a smart card. The identity device is connectable to the mobile terminal 100 via a corresponding port.

The interface unit 170 may be configured as a passage for supplying power to the mobile terminal 100 from a cradle that is connected to the mobile terminal 100. The interface unit 170 may facilitate delivery of various command signals, which are input via the cradle by a user, to the mobile terminal 100. Various command signals input via the cradle or the power may work as a signal for recognizing that the mobile terminal 100 is correctly loaded in the cradle.

The controller 180 typically controls the overall operations of the mobile terminal 100. For example, the controller 180 performs control and processing associated with voice calls, data communications and video conferences. The controller 180 may include a multimedia module 181 that provides multimedia playback. The multimedia module 181 may be configured as part of the controller 180 or may be configured as a separate component. The controller 180 may also perform pattern recognizing processing for recognizing a handwriting input performed on the touch screen as a character and/or recognizing a picture drawing input performed on the touch screen as characters or images.

The power supply unit 190 provides power required by the various components for the mobile terminal 100. The power may be internal power, external power, or combinations thereof.

Embodiments of the present invention described in the following description may be implemented within a recording medium that can be read by a computer or a computer-like device using software, hardware or combinations thereof. For hardware implementations, arrangements and embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors or electrical units for performing other functions. Such embodiments may also be implemented by the controller 180.

For a software implementation, arrangements and embodiments described herein may be implemented with separate software modules, such as procedures and functions, each of which may perform one or more of the functions and operations described herein. Software codes may be implemented with a software application written in any suitable programming language and may be stored in the memory 160 and executed by the controller 180.

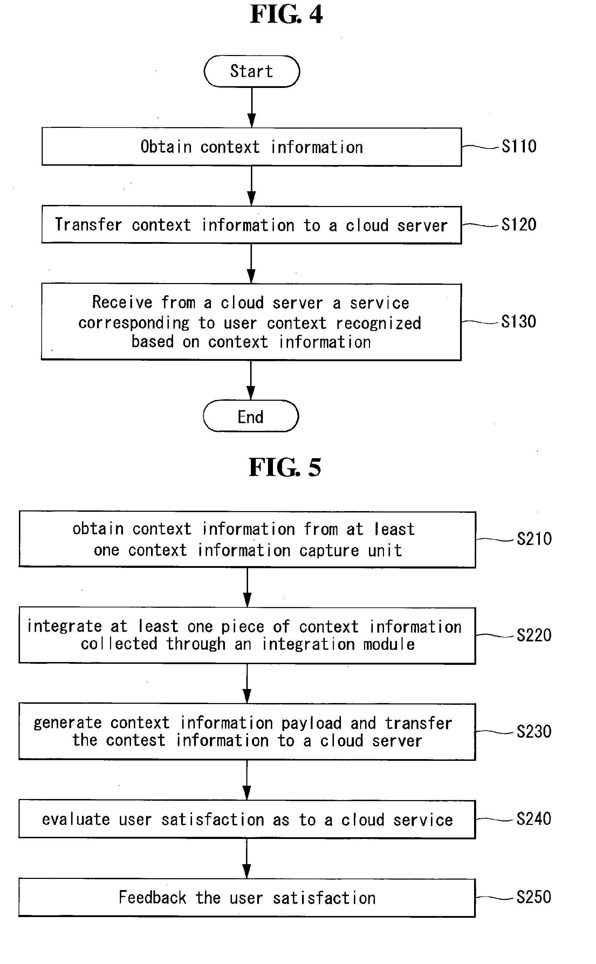

Next, FIG. 4 is a flow diagram of a control method of a mobile terminal according to a first embodiment of the present invention. The control method can be implemented in the mobile terminal 100 described with reference to FIG. 3. An operation of a mobile terminal according to the first embodiment of the present invention will now be described.

In particular, the first embodiment relates to the operation of the mobile terminal 100 capturing context information and transferring the captured information to the cloud server 200 and receiving contents from the cloud server 200.

With reference to FIG. 4, the controller 180 of the mobile terminal 100 can obtain context information (S110). As described in FIG. 1, the controller 180 can collect context information through a context information capture unit. For example, the context information capture unit can include a camera, a temperature sensor, an SNS service application, a voice recognition module, and a user profile.

The controller 180 can transfer captured context information to the cloud server 200 (S120) and receive from the cloud server 200 a service corresponding to the user context recognized based on the context information (S130).

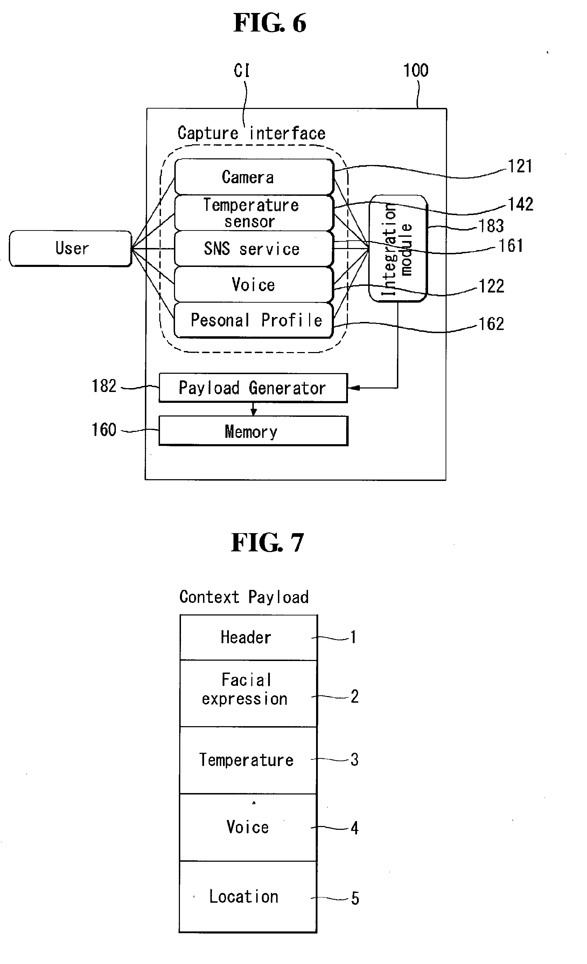

Next, FIG. 5 is a flow diagram of operation of a mobile terminal illustrating the first embodiment in more detail, and FIG. 6 illustrates functional blocks of a mobile terminal for implementing the first embodiment. With reference to FIGS. 5 to 6, the controller 180 can obtain context information from at least one context information capture unit (S210).

As shown in FIG. 6, the mobile terminal 100 can capture context information through an interface CI for gathering context information. The interface CI can include, for example, a camera 121, a temperature sensor 142, an SNS service application 161, a voice recognition module (microphone) 122, and a user profile 162.

In addition, the mobile terminal 100 can integrate at least one piece of context information collected through an integration module 183 (S220). For example, the context information captured may be such that (1) the user's face obtained through the camera 121 is dark; (2) temperature of the user's palm obtained through a sensing unit (e.g., a temperature sensor) 140 of the mobile terminal 100 has risen by two degrees; (3) a keyword related to "parting" has been extracted from the message communicated through the SNS service application 161; (4) pitch of the user obtained through the voice recognition module 122 is low compared with that of normal conditions; (5) "blind date" has been extracted from the voice-recognized keywords; and (6) a deleted phone number exists in the user profile 162.

The context information illustrated in the above situations of (1) to (6) can be collected through the respective context information capture mechanism, and each of context information can be integrated by the integration module 183 which integrates the context information.

Afterwards, a payload generator 182 can generate a context payload about the integrated context information and store the payload in the memory 160. For example, FIG. 7 is an example of context payload generated in a mobile terminal according to a first embodiment of the present invention.

With reference to FIG. 7, context payload includes a header 1 and context information collected 2-5. For example, the user's facial expression 2 captured through the camera 121, temperature 3 obtained through the temperature sensor 140, the user's voice 4 captured through the voice recognition module 122, the user's current location 5 obtained through a location information module 115 can be combined into a single data set and transferred to the cloud server 200 (S230).

The above description describes the mobile terminal 100 capturing context information of the user and transferring the information to the cloud server 200. The following description describes the cloud server 200 providing contents to the user by using the captured context information.

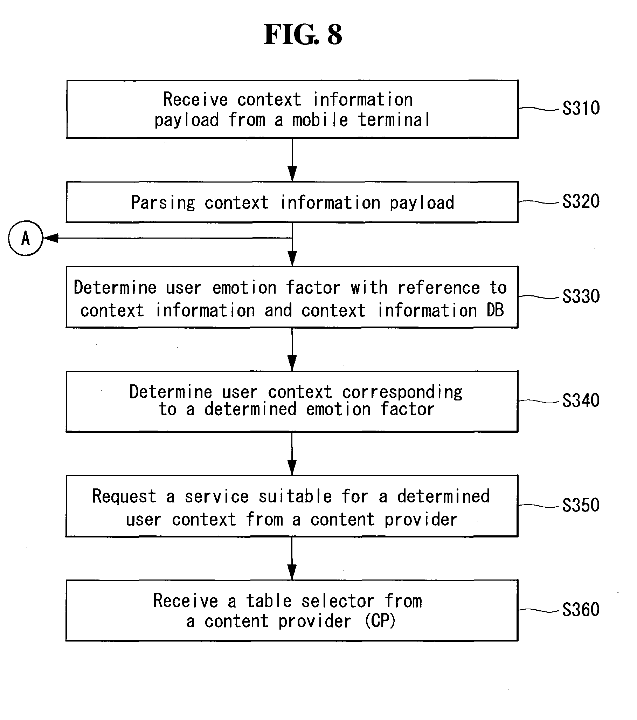

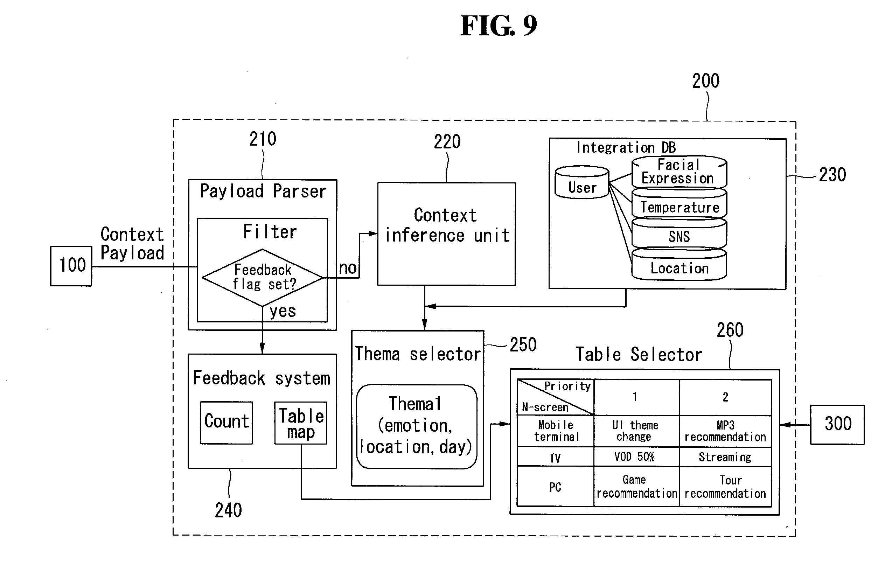

In particular, FIG. 8 is a flow diagram of a control method for a server (e.g., cloud server 200) according to a second embodiment of the present invention, and FIG. 9 illustrates function blocks of a server for implementing the second embodiment. With reference to FIG. 8 to 9, the cloud server 200 receives context payload from the mobile terminal 100 (S310).

As shown in FIG. 9, the cloud server 200 includes a payload parser 210, a context inference unit 220, an integrated DB 230, a feedback system 240, a theme selector 250, and a table selector 260. The cloud serve 200 may assume a different configuration in addition to the aforementioned configuration. The payload parser 210 parses the received context information payload (S320).

The parsing result can be stored in the integrated DB 230 and each of the context information can be classified according to the respective context information capture units and stored therein. In addition, the context inference unit 220 can infer the user context from the parsing result. For example, as described above, the user context can be inferred to be "parting" from the user's facial expression, deletion of a contact address from the user profile, keywords extracted from messages communicated through the SNS application, and so on.

Meanwhile, the context inference unit 220 can determine an emotion factor of the user with reference to the context information and the integrated DB 230 of the context information (S330). Determined can be the user context corresponding to the emotion factor determined as above (S340). For example, the context inference unit 220 can infer the current user context to be "parting" and additionally determine the user's emotion to be "gloomy," "sorry," "lonely," or "sad."

In addition, the theme selector 250 can combine emotion, location, and capture date of context information into a set and each set can include a data list organizing contents recommended for the user according to priorities of the contents. If the user's emotion is determined through the context inference unit 220, the theme selector 250 can select a service available with reference to the user's emotion determined above.

The controller of the cloud server 200 can request from a content provider a service relevant to the user context determined above (S350). Next, the controller can receive a table selection list 260 from the content provider and provide an appropriate service for the mobile terminal 100 according to the table selection list 260 (S360). Similarly, the controller can provide a service relevant to at least one external device connected to N-screen of the mobile terminal 100.

At this time, because the table selection list 260 provides a list of contents or services to be provided to a particular device according to the respective priorities, the cloud server 200 can provide a service suitable for the user context to each device by taking the priority into account.

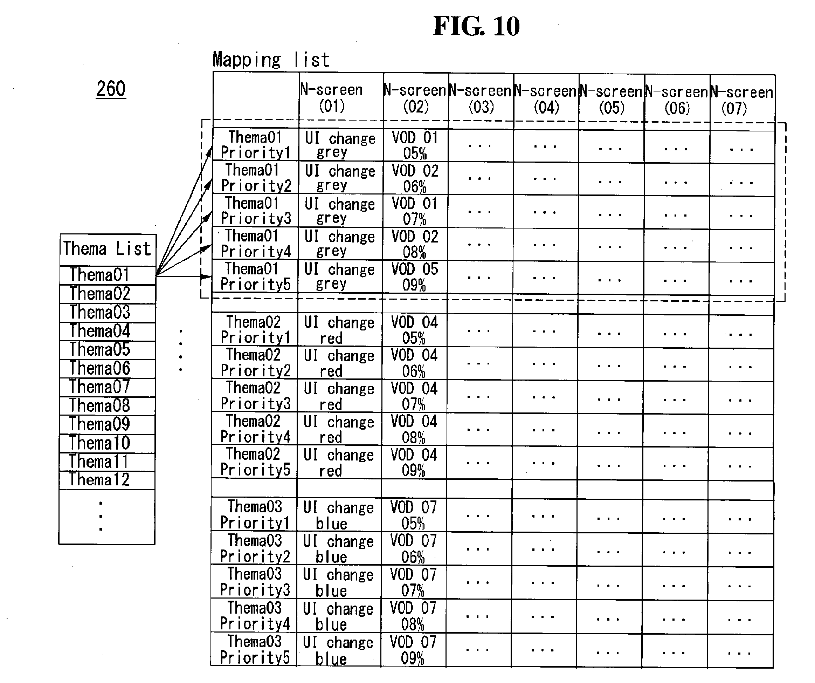

The table selection list 260 can be received from the content provider 300 according to a service request of the cloud server 200. The table selection list 260 will be described in more detail with reference to FIG. 10.

Next, FIG. 10 is a content mapping list obtained from the content provider shown in FIG. 1, representing a list of services in the order of priorities provided to terminals of the N-screen environment. With reference to FIG. 10, the content provider 300 can include a list of themes organizing a plurality of theme information.

Each theme information can include at least one priority for each device. For example, Theme 1 provides an item indicating to change the background screen of a first N-screen to have a grey color. For a second N-screen to which the Theme 1 is applied, VOD01 05% is applied. VOD02 06% is applied to the second N-screen when applying a second priority. Similar rules are applied for the priorities 3 to 5 as shown in FIG. 10.

Meanwhile, with reference to FIG. 10, the cloud server 200 can select a theme predetermined corresponding to the user's emotion from among a list of themes 260 provided from the content provider 300 and provide the mobile terminal 100 with a service corresponding to the selected theme.

In addition, the cloud server 200 can provide at least one external device connected through N-screen of the mobile terminal 100 with a service corresponding to the priority determined from among the selected theme.

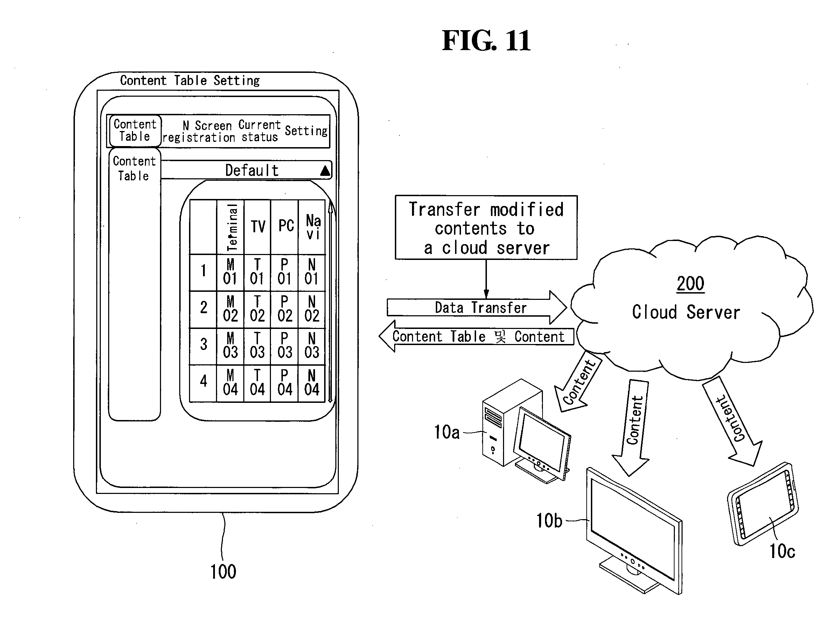

Next, FIG. 11 is a system environment for illustrating a third embodiment of the present invention. The mobile terminal 100 according to the present invention is connected to at least one N-screen device 10a, 10b, 10c through a predetermined network. The predetermined network is a local network and can include DLNA (Digital Living Network Alliance) network.

The mobile terminal 100 can control N-screen devices 10a, 10b, 10c and control the types of contents provided by the cloud server 200 to the N-screen devices 10a, 10b, 10c. With reference to FIG. 11, the mobile terminal 100 has a list of contents provided to the mobile terminal 100 and at least one N-screen devices 10a, 10b, 10c connected to the mobile terminal 100 through N-screen; and can change contents to be provided from among the list of contents to a particular N-screen device.

The mobile terminal 100 can transfer a changed list of contents to the cloud server 200. The cloud server 200, based on the changed list of contents, can provide predetermined contents to the mobile terminal 100 and the N-screen devices 10a, 10b, 10c.

Accordingly, a use pattern of the user against N-screen devices 10a, 10b, 10c may vary depending on the current situation of the user; as the situation of the user changes, the contents provided to each N-screen device 10a, 10b, 10c may correspond to those contents on which the changed situation of the user is automatically reflected.

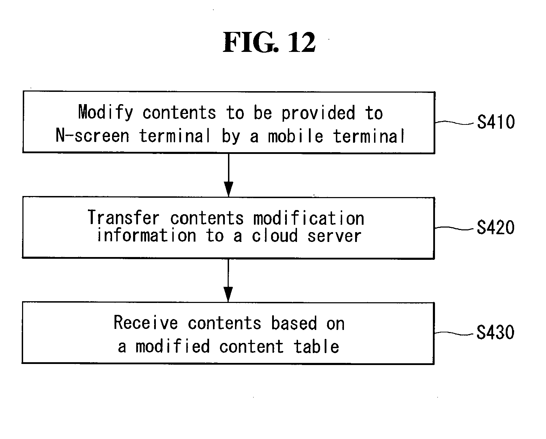

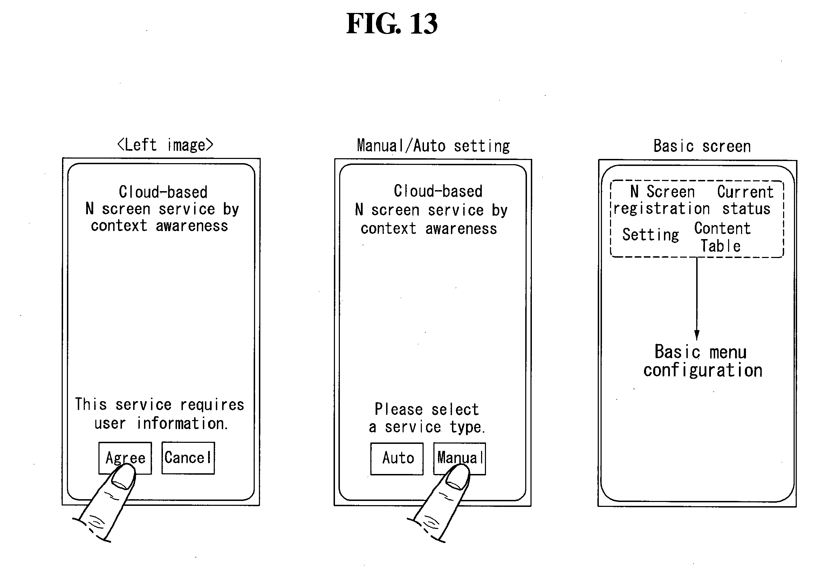

FIG. 12 is a flow diagram of a control method of a mobile terminal according to the third embodiment of the present invention, and FIGS. 13 to 18 are drawings introduced to illustrate the third embodiment of the present invention. With reference to FIG. 12, the mobile terminal 100 can modify contents to be provided to an N-screen device 10a, 10b, 10c, S410.

When the contents to be provided to an N-screen device 10a, 10b, 10c are modified, the mobile terminal 100 can transfer contents modification information to the cloud server 200, S420 and based on a modified content table received from the cloud server 200, receive the contents S430.

With reference to FIG. 13, personal information is preferably registered for the mobile terminal 100 in order for the user to access a service provided by a system according to one embodiment of the present invention. Also, the mobile terminal 100 can automatically set up at least one external device (for example, an N-screen device 10a, 10b, 10c) to receive a cloud-based service or the user can manually set up the at least one external device.

When the user's personal information is registered and a pattern for N-screen configuration is determined, the mobile terminal 100 can display a user interface (UI) for providing a cloud-based service according to embodiment of the present invention on a touch screen 151.

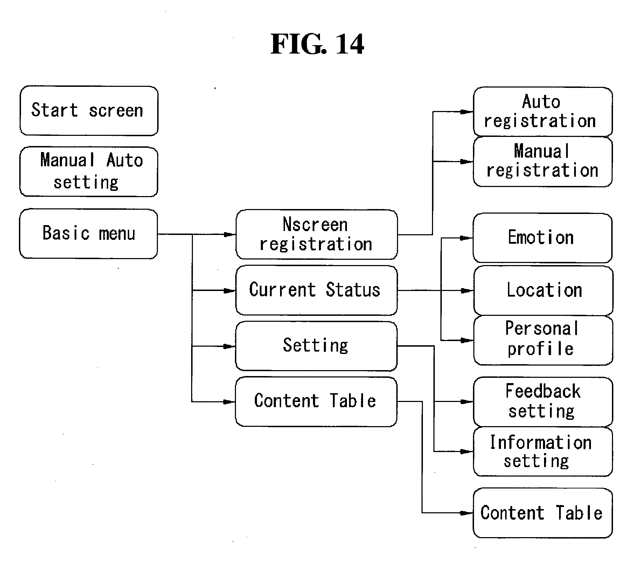

With reference to FIG. 14, the user interface (UI) is a basic menu, containing "N-screen registration", "Current status", "Setting", and "Content table". Also, depending on situations, the individual item can have sub-items.

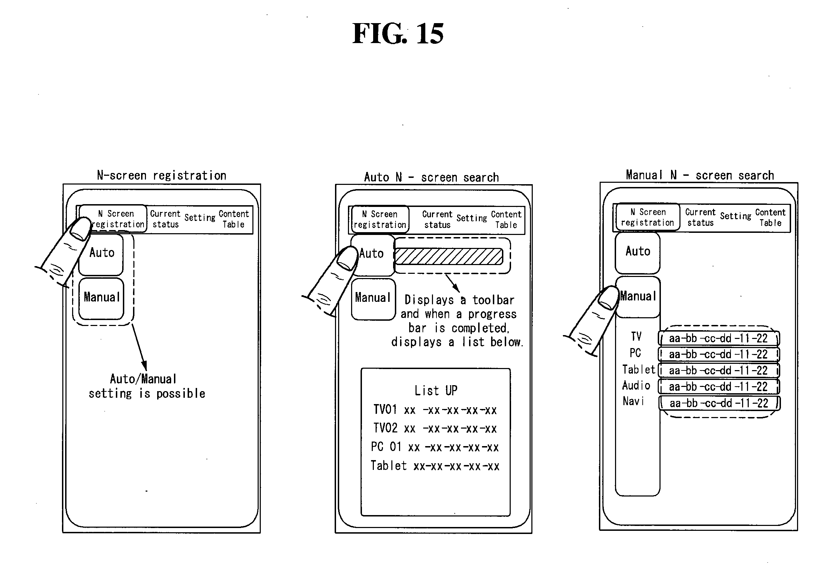

With reference to FIG. 15, "N-screen registration" can select a device to be connected to N-screen either by automatically searching for a device to be connected to the N-screen of the mobile terminal 100 or by the user's manually entering the MAC address of each device.

When "Auto" is selected, the mobile terminal 100 and devices (MAC addresses of TV, PC, and Tablet PC) automatically connected as N-screens are registered automatically and a list of registered devices can be displayed on the touch screen 151. When "Manual" is selected, the user can directly register each device.

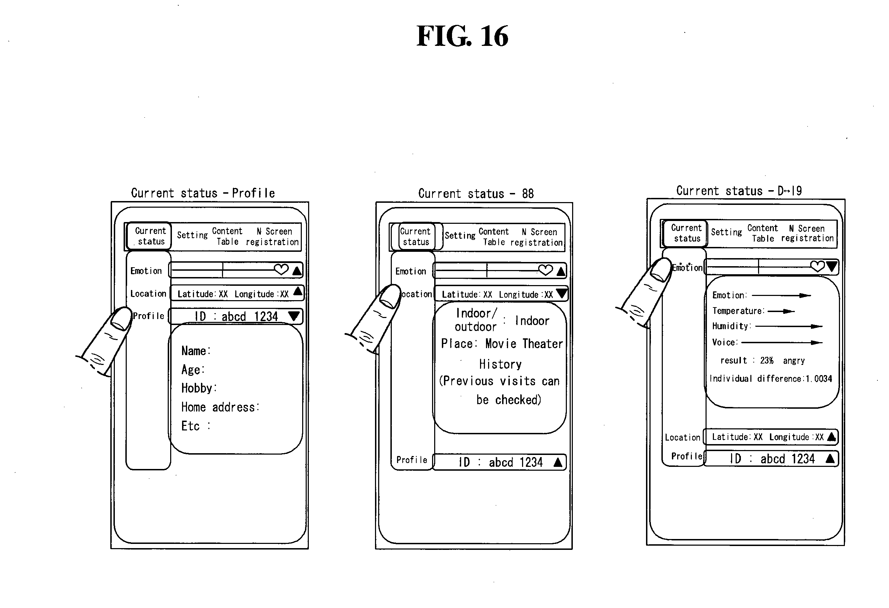

With reference to FIG. 16, "Current status" can contain "emotion", "location", and "profile" of the user. Since the mobile terminal 100 gathers various kinds of information and transfers the information to the cloud server 200, the "Current status" item can be set up by receiving the information for the item from the cloud server 200.

"Emotion" item may be used to determine the user's emotion by setting up various environments. "Location" item can be used for analyzing the location history of the user. "Profile" item can contain the user's ID, nationality, address, phone number, and so on. The user can directly check the "Current status" item.

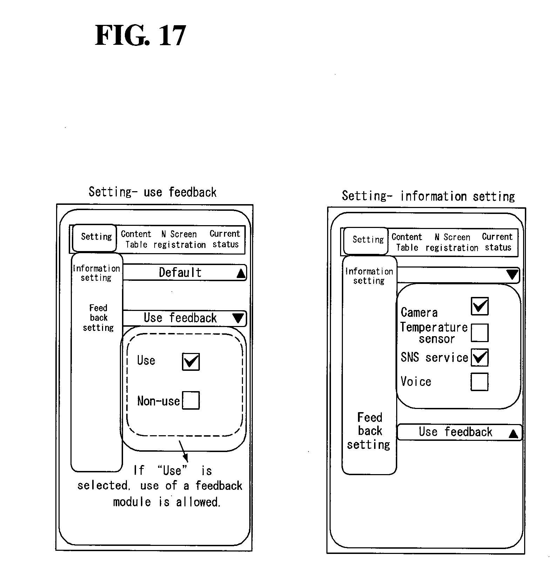

With reference to FIG. 17, "Feedback setting" item can set up a feedback service. The feedback service provides the cloud server 200 with feedback of user satisfaction about the contents (service) provided by the cloud server 200; if the cloud server 200 receives the feedback from the mobile terminal 100, the cloud server 200 can provide contents of the next priority to the mobile terminal 100.

Meanwhile, "Information setting" item allows the user to select the type of context information captured. Therefore, the user can directly set up a determination criterion of context information when the user receives a predetermined service from the cloud server 200 among "camera, temperature sensor, SNS service, and voice".

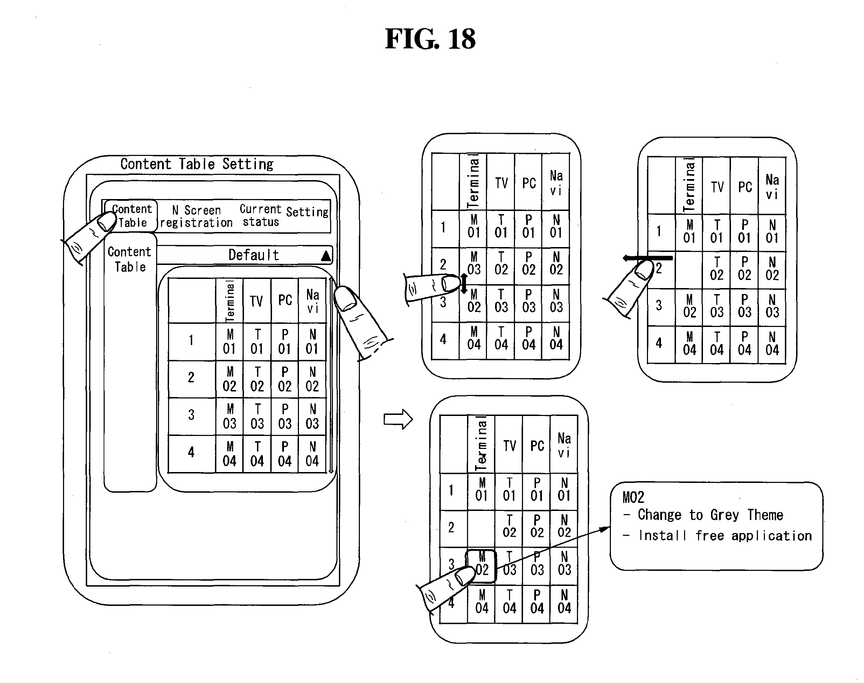

With reference to FIG. 18, "Content table" item corresponds to a file containing a list of contents provided for N-screen devices in the order of priority and the controller 180 of the mobile terminal 100, if an input predetermined related to the content table is received, can change the contents to be provided for the respective N-screen devices or priorities.

For example, contents to be provided to an N-screen device can be changed by a drag-n-drop input about particular contents and priority. In other words, the "Content table" item stored in the mobile terminal 100 is synchronized with the cloud server 200 as it is transferred to the cloud server 200; the cloud server 200 can provide contents to the individual N-screen devices by reflecting modified items from among the "Content table".

According to the third embodiment of the present invention, contents to be provided to N-screen devices can be changed, modified, and deleted more easily. Also, the user can directly check his or her current status and directly modify his or her current status. Also, because of the existence of the cloud server 200, the user can check what has been modified in terms of software in the mobile terminal 100 from the cloud server 200 and receive contents reflecting the modification.

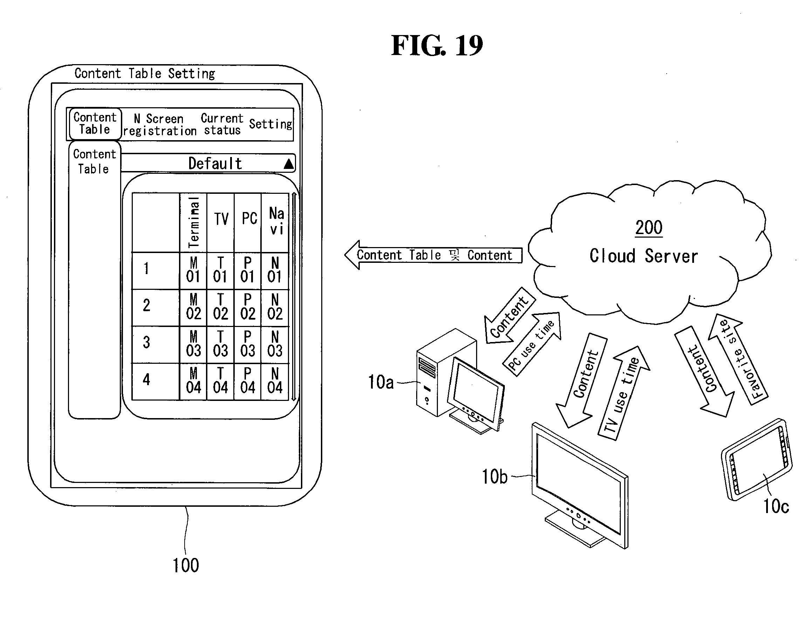

FIG. 19 is a system environment for illustrating a fourth embodiment of the present invention. With reference to FIG. 19, N-screen devices 10a, 10b, 10c can not only receive contents from the cloud server 200 but also transfer context information related to the use of each device to the cloud server 200.

For example, PC 10a can transfer information of PC use time to the cloud server 200 and TV 10b can transfer information of TV watching time to the cloud server 200. Also, a tablet PC 10c can transfer information of frequently visited websites to the cloud server 200.

The cloud server 200, by receiving use information about each device from the N-screen device 10a, 10b, 10c, can update a content table and transfer the updated content table to the mobile terminal 100. In addition, the cloud server 200, based on the updated content table, can provide predetermined contents to the mobile terminal 100 and N-screen devices 10a, 10b, 10c.

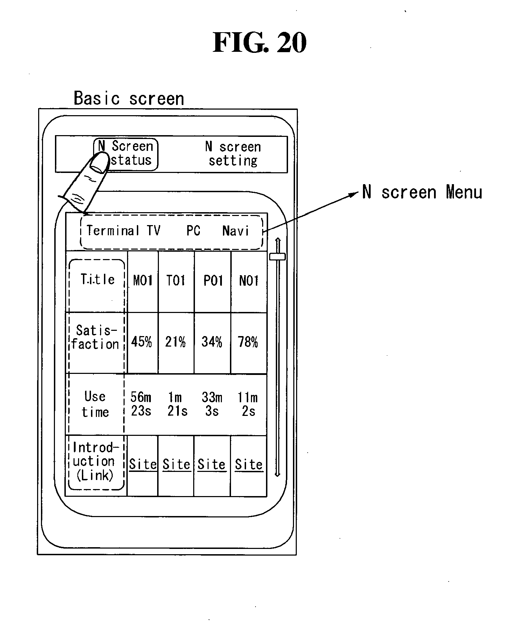

Next, FIGS. 20 to 21 are drawings introduced to illustrate the fourth embodiment of the present invention. With reference to FIG. 20, according to the fourth embodiment of the present invention, when the context information of N-screen device 10a, 10b, 10c is transferred to the cloud server 200, the mobile terminal 100 can monitor the transfer.

For this purpose, the mobile terminal 100 can perform an application for monitoring the context information of N-screen devices. As the application is carried out, N-screen status and N-screen setting items can be displayed on the touch screen 151.

If an N-screen status item is selected, a list of contents currently provided for the N-screen devices can be displayed on the touch screen 151. The list of contents can include titles of the contents, user satisfaction of the respective contents, information of use time, link information of the corresponding contents, and so on.

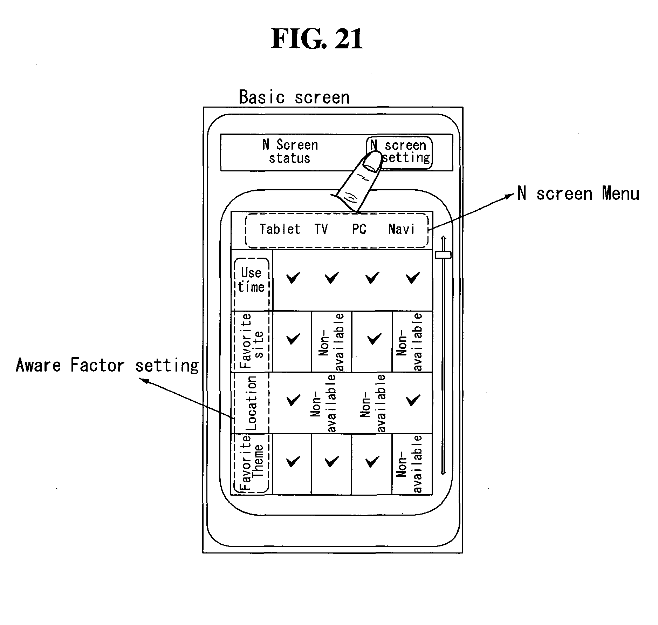

FIG. 21 illustrates an example of screen display where the controller 180 of the mobile terminal 100 performs an application for monitoring the context information of N-screen devices and context information which can be transferred to the cloud server 200 by each N-screen device is displayed for selection.

In other words, with reference to FIG. 21, for N-screen devices (Tablet PC, TV, PC, Navigation device), use time information is available for all the devices; bookmarks item can be collected from Tablet and PC; and when of Tablet and Navigation device, they can be set up so that location information can be collected.

As described above, the mobile terminal 100 can set up the context information transferred from N-screen devices to the cloud server 200 and monitor a current status of gathering context information of N-screen devices. Accordingly, N-screen devices can transfer context awareness factor to the cloud server 200 in terms of software and the mobile terminal 100, by carrying out a monitoring application, can check information transferred from N-screen devices to the cloud server 200.

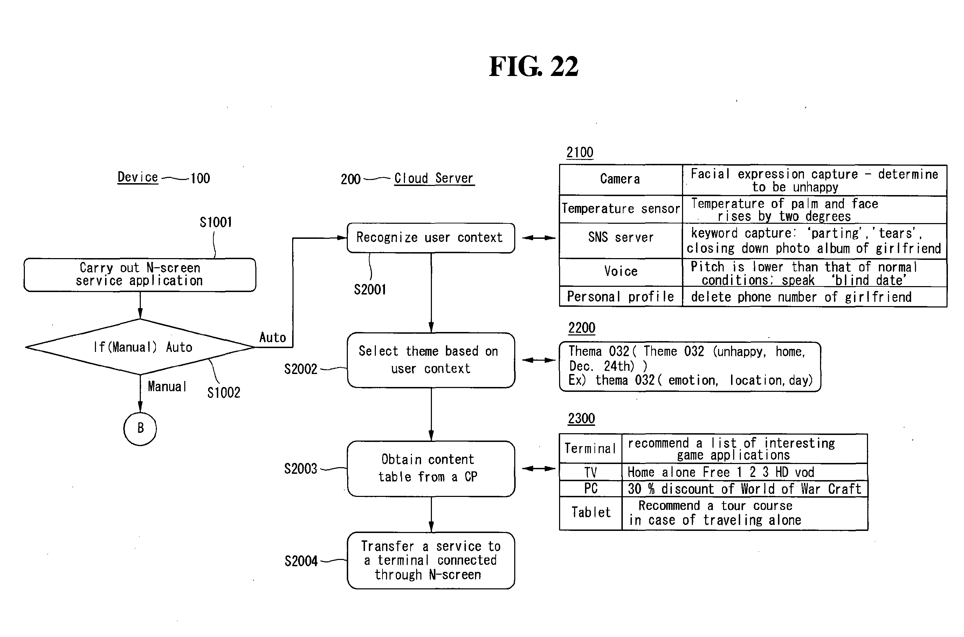

Next, FIGS. 22 to 23 illustrate a service providing method of a cloud server for embodiments of the present invention through specific context awareness. With reference to FIG. 22, the mobile terminal 100 can perform N-screen service applications S1001.

For automatic registration of N-screen devices S1002, the cloud server 200 can receive context information from the mobile terminal 100 and at least one external device connected to the mobile terminal through N-screen. The cloud server 200 can recognize user context based on the received context information S2002.

For example, the cloud server 200 may infer that the user is currently unhappy based on the user's facial expression captured through a camera. Also, the cloud server 200 can realize that the temperature of the user's palm and face obtained through a temperature sensor has risen by two degrees. Furthermore, the cloud server 200 can recognize that the keywords extracted from messages communicated through an SNS application are the words of "parting" and "tears".

The pitch of the user obtained through a voice recognition module is lower than that of normal conditions and it can be figured out that a word of "blind date" has been extracted from among voice-recognized keywords. Also, the cloud server 200 can recognize that the phone number of the user's girlfriend has been removed from the user profile S2100.

The cloud server 200, based on the recognized user context, can select a theme of contents to be provided to the mobile terminal 100. The cloud server 200 infers the user's emotion to be "gloomy" and can select a relevant theme (theme 32) based on time information at which the user's emotion, location, and context information have been collected S2002.

The cloud server 200, based on the selected theme, can request contents from a content provider (CP) S2003. The content provider (CP), in response to the request of the cloud server 200, transfers a predetermined content table 2300 to the cloud server 200 and the cloud server 200 can transfer the relevant contents to the mobile terminal 100 and at least one external device connected as N-screen of the mobile terminal 100.

The content table 2300, based on the current context information of the user (parted and gloomy), may recommend a list of interesting game applications for the mobile terminal 100; comedy movies for TV; discount information of game items for PC; and tour information for Tablet PC. In other words, based on the context information collected from N-screen devices including the mobile terminal 100, the cloud server 200 can provide relevant contents (service) to the individual N-screen devices.

Meanwhile, in the embodiment of FIG. 22, the mobile terminal 100 can perform a procedure of manually setting up N-screen devices.

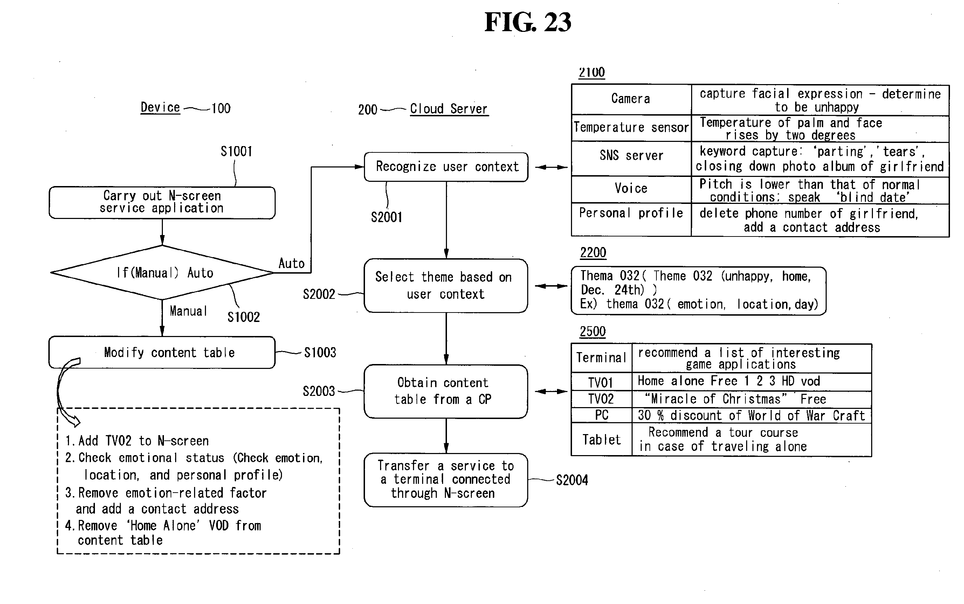

With reference to FIG. 23, when setting up registration of N-screen devices manually, the user can directly modify the content table in the mobile terminal 100. For example, based on the content table 2500 illustrated in FIG. 22, TV02 may be added into the list of N-screen devices. Also, the user can directly check his or her current emotional status through the mobile terminal 100.

Also, for example, the user can remove facial expression-related factor from among the context information and can add a new address into the user profile. Also, the user can remove a movie provided for the Tablet PC from the content table 2500 shown in FIG. 22.

In this instance, as shown in FIG. 23, it can be noticed that an item of recognizing facial expression by using a camera input has been removed from the user context recognition result 2400; TV02 has been newly added to the content table 2500; and a movie provided for TV01 has been deleted.

A mobile terminal and a control method for the mobile terminal according to one embodiment of the present invention provide the following advantageous effects.

According to the present invention, by using cloud computing services, context-aware services can be provided to at least one of terminals operating in the N-screen environment. Also a cloud server obtaining user context information can provide at least one of terminal operating in the N-screen environment with user-tailored services based on the user context information.

Further, services provided in the cloud computing environment can be personalized according to the user context and the personalized services can be provided for the user.

The method for controlling of the mobile terminal according to embodiments of the present invention may be recorded in a computer-readable recording medium as a program to be executed in the computer and provided. Further, the method for controlling a mobile terminal according to embodiments of the present invention may be executed by software. When executed by software, the elements of the embodiments of the present invention are code segments executing a required operation. The program or the code segments may be stored in a processor-readable medium or may be transmitted by a data signal coupled with a carrier in a transmission medium or a communication network.

The computer-readable recording medium includes any kind of recording device storing data that can be read by a computer system. The computer-readable recording device includes a ROM, a RAM, a CD-ROM, a DVD-ROM, a DVD-RAM, a magnetic tape, a floppy disk, a hard disk, an optical data storage device, and the like. Also, codes which are distributed in computer devices connected by a network and can be read by a computer in a distributed manner are stored and executed in the computer-readable recording medium.

As the present invention may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100), comprising:
a wireless communication unit (110);
a context information capture unit configured to capture context information including user-specific context information about a user of the mobile terminal (100); and
a controller (180) configured to:
control the wireless communication unit (110) to transmit the captured context information to a cloud server (200), and
receive from the cloud server (200) a service generated by the cloud server (200) in response to the user-specific context information;
wherein the controller (180) is further configured to control the wireless communication unit (110) to transmit a changed service list to the cloud server (200), and based on the changed service list, control predetermined services to be provided to the mobile terminal (100) and at least one external device (10a, 10b, 10c) in response to receiving an input changing at least one service item included in the list of services.

2. The mobile terminal (100) of claim 1, wherein the context information capture unit includes at least one of a camera, a sensor, an SNS application, a voice recognition module, and a user profile for capturing the user-specific context information transmitted to the cloud server (200).

3. The mobile terminal (100) of claim 2, wherein the user-specific context information includes at least one of a facial expression of the user obtained through the camera, a temperature of at least one part of the user's body obtained through the temperature sensor, messages communicated through the SNS application with the user, voice recognition keywords of the user obtained through the voice recognition module, pitch, and information about a change of the user profile.

4. The mobile terminal (100) as claimed in any one of claims 1 to 3, wherein the wireless communication unit (110) is further configured to form a network with the at least one external device (10a, 10b, 10c), and
wherein the controller (180) is further configured to monitor and store context information transferred by the at least one external device (10a, 10b, 10c) to the cloud server (200).

5. The mobile terminal (100) as claimed in any one of claims 1 to 4, wherein the controller (180) is further configured to store in a database a list of services in an order of priorities provided to the mobile terminal (100) and the at least one external device (10a, 10b, 10c) provided through the server (200).

6. The mobile terminal as claimed in any one of claims 1 to 5, wherein the controller (180) is further configured to control the wireless communication unit (110) to transmit to the server (200) evaluation information about a user satisfaction and request a service of lower priority according to the evaluation information.

7. The mobile terminal (100) as claimed in any one of claims 1 to 6, wherein the service corresponding to the context information includes at least one of contents recommendation based on the context information and a theme change of the mobile terminal (100).

8. A server (200), comprising:
a communication unit configured to wirelessly communicate with a mobile terminal (100);
a database (230) configured to store context information received from the mobile terminal (100) through the communication unit;
a context inference unit (220) configured to infer a user context from the context information stored in the database (230); and a controller configured to generate a service in response to the inferred user context, and to transmit the generated service to the mobile terminal (100);
wherein a changed service list is received by the server (200) from the mobile terminal (100), and the server (200) is configured to provide predetermined services to the mobile terminal (100) and at least one external device (10a, 10b, 10c) based on the changed service list.

9. The server (200) of claim 8, wherein the controller is further configured to selectively transfer different generated services to the different external devices (10a, 10b, 10c) connected to the mobile terminal (100) based on the context information.

10. The server (200) of claim 8 or 9, wherein the database (230) is further configured to store combined emotion and location information of the user and time information at which the context information is captured into a set and map the set into corresponding themes, the emotion information being inferred by a user's facial expression captured by a camera.

11. A method of controlling a mobile terminal (100), the method comprising:
capturing (S110), via a context information capture unit of the mobile terminal (100), context information including user-specific context information about a user of the mobile terminal (100);
transmitting (S120), via a wireless communication unit (110) of the mobile terminal (100), the captured context information to a cloud server (200);
receiving (S130) from the cloud server (200), via a controller (180) of the mobile terminal (100), a service generated by the cloud server (200) in response to the user-specific context information;
transmitting via the wireless communication unit (110) a changed service list to the cloud server (200); and
controlling predetermined services to be provided to the mobile terminal (100) and at least one external device (10a, 10b, 10c) in response to receiving an input changing at least one service item included in the list of services based on the changed service list.

12. The method of claim 11, further comprising:
forming, via the wireless communication unit (110), a network with at least one external device (10a, 10b, 10c); and
monitoring and storing context information transferred by the at least one external device (10a, 10b, 10c) to the server (200).

13. The method as claimed in any one of claims 11 to 12, further comprising:
transmitting to the server (200) evaluation information about a user satisfaction; and
requesting a service of a lower priority according to the evaluation information.

## Patentansprüche

1. Mobiles Endgerät (100), das umfasst:
eine drahtlose Kommunikationseinheit (110);
eine Kontextinformationserfassungseinheit, die konfiguriert ist, Kontextinformationen zu erfassen, die anwenderspezifische Kontextinformationen über einen Anwender des mobilen Endgeräts (100) enthalten; und
eine Steuereinheit (180), die konfiguriert ist:
die drahtlose Kommunikationseinheit (110) zu steuern, um die erfassten Kontextinformationen zu einem Cloud-Server (200) zu senden, und
von dem Cloud-Server (200) einen Dienst zu empfangen, der durch den Cloud-Server (200) in Reaktion auf die anwenderspezifischen Kontextinformationen erzeugt wird;
wobei die Steuereinheit (180) ferner konfiguriert ist, die drahtlose Kommunikationseinheit (110) zu steuern, um eine Liste geänderter Dienste zu dem Cloud-Server (200) zu senden und basierend auf der Liste geänderter Dienste vorbestimmte Dienste, die für das mobile Endgerät (100) und wenigstens eine externe Vorrichtung (10a, 10b, 10c) bereitgestellt werden sollen, in Reaktion auf das Empfangen einer Eingabe, die wenigstens einen in der Liste der Dienste enthaltenen Diensteintrag ändert, zu steuern.

2. Mobiles Endgerät (100) nach Anspruch 1, wobei die Kontextinformationserfassungseinheit eine Kamera und/oder einen Sensor und/oder einer SNS-Anwendung und/oder ein Spracherkennungsmodul und/oder ein Anwenderprofil zum Erfassen der anwenderspezifischen Kontextinformationen, die zu dem Cloud-Server (200) gesendet werden, umfasst.

3. Mobiles Endgerät (100) nach Anspruch 2, wobei die anwenderspezifischen Kontextinformationen einen durch die Kamera erhaltenen Gesichtsausdruck des Anwenders und/oder eine durch den Temperatursensor erhaltene Temperatur wenigstens eines Abschnitts des Körpers des Anwenders und/oder Nachrichten, die durch die SNS-Anwendung mit dem Anwender kommuniziert werden und/oder durch das Spracherkennungsmodul erhaltene Spracherkennungsschlüsselworte des Anwenders und/oder eine Tonlage und/oder Informationen über eine Änderung des Anwenderprofils enthalten.

4. Mobiles Endgerät (100) nach einem der Ansprüche 1 bis 3, wobei die drahtlose Kommunikationseinheit (100) ferner konfiguriert ist, ein Netz mit der wenigstens einen externen Vorrichtung (10a, 10b, 10c) zu bilden, und
wobei die Steuereinheit (180) ferner konfiguriert ist, Kontextinformationen, die durch die wenigstens eine externe Vorrichtung (10a, 10b, 10c) zu dem Cloud-Server (200) übertragen werden, zu überwachen und zu speichern.

5. Mobiles Endgerät (100) nach einem der Ansprüche 1 bis 4, wobei die Steuereinheit (180) ferner konfiguriert ist, in einer Datenbank eine Liste von Diensten in einer Prioritätsreihenfolge, die für das mobile Endgerät (100) und für die wenigstens eine externe Vorrichtung (10a, 10b, 10c) bereitgestellt wird, die durch den Server (200) bereitgestellt wird, zu speichern.

6. Mobiles Endgerät nach einem der Ansprüche 1 bis 5, wobei die Steuereinheit (180) ferner konfiguriert ist, die drahtlose Kommunikationseinheit (110) zu steuern, um Auswertungsinformationen über eine Anwenderzufriedenheit zu dem Server (200) zu senden und einen Dienst niedriger Priorität gemäß den Auswertungsinformationen anzufordern.

7. Mobiles Endgerät (100) nach einem der Ansprüche 1 bis 6, wobei der Dienst, der den Kontextinformationen entspricht, Inhaltsempfehlungen, die auf den Kontextinformationen beruhen, und/oder eine Themenänderung des mobilen Endgeräts (100) enthält.

8. Server (200), der umfasst:
eine Kommunikationseinheit, die konfiguriert ist, drahtlos mit einem mobilen Endgerät (100) zu kommunizieren;
eine Datenbank (230), die konfiguriert ist, Kontextinformationen, die von dem mobilen Endgerät (100) durch die Kommunikationseinheit empfangen werden, zu speichern;
eine Kontextfolgerungseinheit (220), die konfiguriert ist, einen Anwenderkontext aus den in der Datenbank (230) gespeicherten Kontextinformationen zu folgern; und
eine Steuereinheit, die konfiguriert ist, einen Dienst in Reaktion auf den gefolgerten Anwenderkontext zu erzeugen und den erzeugten Dienst zu dem mobilen Endgerät (100) zu senden;
wobei eine Liste geänderter Dienste durch den Server (200) von dem mobilen Endgerät (100) empfangen wird und der Server (200) konfiguriert ist, vorbestimmte Dienste für das mobile Endgerät (100) und wenigstens eine externe Vorrichtung (10a, 10b, 10c) basierend auf der Liste geänderter Dienste bereitzustellen.

9. Server (200) nach Anspruch 8, wobei die Steuereinheit ferner konfiguriert ist, selektiv unterschiedliche erzeugte Dienste zu den unterschiedlichen externen Vorrichtungen (10a, 10b, 10c), die mit dem mobilen Endgerät (100) verbunden sind, basierend auf den Kontextinformationen zu übertragen.

10. Server (200) nach Anspruch 8 oder 9, wobei die Datenbank (230) ferner konfiguriert ist, kombinierte Emotions- und Ortsinformationen des Anwenders und Zeitinformationen, zu denen die Kontextinformationen erfasst werden, in einem Datensatz zu speichern und den Datensatz auf entsprechende Themen abzubilden, wobei die Emotionsinformationen aus dem durch eine Kamera aufgenommenen Anwendergesichtsausdruck gefolgert werden.

11. Verfahren zum Steuern eines mobilen Endgeräts (100), wobei das Verfahren umfasst:
Erfassen (S101) von Kontextinformationen, die anwenderspezifische Kontextinformationen über einen Anwender des mobilen Endgeräts (100) enthalten, über eine Kontextinformationserfassungseinheit des mobilen Endgeräts (100);
Senden (S 120) der erfassten Kontextinformationen über eine drahtlose Kommunikationseinheit (110) des mobilen Endgeräts zu einem Cloud-Server (200);
Empfangen (S130) von dem Cloud-Server (200) über eine Steuereinheit (180) des mobilen Endgeräts (100) eines Dienstes, der durch den Cloud-Server (200) in Reaktion auf die anwenderspezifischen Kontextinformationen erzeugt wird;
Senden einer Liste geänderter Dienste über die drahtlose Kommunikationseinheit (100) zu dem Cloud-Server (200); und
Steuern vorbestimmter Dienste, die für das mobile Endgerät (100) und wenigstens eine externe Vorrichtung (10a, 10b, 10c) bereitgestellt werden sollen, in Reaktion auf eine Eingabe, die wenigstens einen Diensteintrag, der in der Liste enthalten ist, ändert, basierend auf der Liste geänderter Dienste.

12. Verfahren nach Anspruch 11, das ferner umfasst:
Bilden eines Netzes mit wenigstens einer externen Vorrichtung (10a, 10b, 10c) über die drahtlose Kommunikationseinheit (110); und
Überwachen und Speichern von Kontextinformationen, die durch die wenigstens eine externe Vorrichtung (10a, 10b, 10c) zu dem Server (200) übertragen werden.

13. Verfahren nach einem der Ansprüche 11 bis 12, das ferner umfasst:
Senden von Auswertungsinformationen über eine Anwenderzufriedenheit zu dem Server (200); und
Anfordern eines Dienstes einer niedrigeren Priorität gemäß den Auswertungsinformationen.

## Revendications

1. Terminal mobile (100), comprenant :
une unité de communication sans fil (110) ;
une unité d'acquisition d'informations de contexte configurée pour acquérir des informations de contexte comprenant des informations de contexte spécifique à l'utilisateur au sujet d'un utilisateur du terminal mobile (100) ; et
un organe de commande (180) configuré pour :
commander à l'unité de communication sans fil (110) de transmettre les informations de contexte acquises à un serveur du cloud (200), et
recevoir du serveur du cloud (200) un service généré par le serveur du cloud (200) en réponse aux informations de contexte spécifique à l'utilisateur ;
dans lequel l'organe de commande (180) est en outre configuré pour commander à l'unité de communication sans fil (110) de transmettre une liste de services changés au serveur du cloud (200), et sur la base de la liste de services changés, commander la fourniture de services prédéterminés au terminal mobile (100) et à au moins un dispositif externe (10a, 10b, 10c) en réponse à la réception d'une entrée changeant au moins un élément de service inclus dans la liste de services.

2. Terminal mobile (100) selon la revendication 1, dans lequel l'unité d'acquisition d'informations de contexte comprend au moins l'un d'une caméra, d'un capteur, d'une application SNS, d'un module de reconnaissance vocale et d'un profil d'utilisateur pour l'acquisition des informations de contexte spécifique à l'utilisateur transmises au serveur du cloud (200).

3. Terminal mobile (100) selon la revendication 2, dans lequel les informations de contexte spécifique à l'utilisateur comprennent au moins l'un d'une expression faciale de l'utilisateur obtenue par l'intermédiaire de la caméra, d'une température d'au moins une partie du corps de l'utilisateur obtenue par l'intermédiaire du capteur de température, de messages communiqués par l'intermédiaire de l'application SNS avec l'utilisateur, de mots-clés de reconnaissance vocale de l'utilisateur obtenus par l'intermédiaire du module de reconnaissance vocale, d'un ton et d'informations concernant un changement du profil d'utilisateur.

4. Terminal mobile (100) selon l'une quelconque des revendications 1 à 3, dans lequel l'unité de communication sans fil (110) est en outre configurée pour former un réseau avec l'au moins un dispositif externe (10a, 10b, 10c), et
dans lequel l'organe de commande (180) est en outre configuré pour surveiller et mémoriser des informations de contexte transférées par l'au moins un dispositif externe (10a, 10b, 10c) au serveur du cloud (200).

5. Terminal mobile (100) selon l'une quelconque des revendications 1 à 4, dans lequel l'organe de commande (180) est en outre configuré pour mémoriser dans une base de données une liste de services dans un ordre de priorité fourni au terminal mobile (100) et à l'au moins un dispositif externe (10a, 10b, 10c) fourni par l'intermédiaire du serveur (200).

6. Terminal mobile (100) selon l'une quelconque des revendications 1 à 5, dans lequel l'organe de commande (180) est en outre configuré pour commander à l'unité de communication sans fil (110) de transmettre au serveur (200) des informations d'évaluation concernant une satisfaction d'utilisateur et pour demander un service de priorité inférieure en fonction des informations d'évaluation.

7. Terminal mobile (100) selon l'une quelconque des revendications 1 à 6, dans lequel le service correspondant aux informations de contexte comprend au moins l'un d'une recommandation de contenu sur la base des informations de contexte et d'un changement de thème du terminal mobile (100).

8. Serveur (200), comprenant :
une unité de communication configurée pour communiquer sans fil avec un terminal mobile (100) ;
une base de données (230) configurée pour mémoriser des informations de contexte reçues du terminal mobile (100) par l'intermédiaire de l'unité de communication ;
une unité de déduction de contexte (220) configurée pour déduire un contexte d'utilisateur à partir des informations de contexte mémorisées dans la base de données (230) ; et
un organe de commande configuré pour générer un service en réponse au contexte d'utilisateur déduit, et pour transmettre le service généré au terminal mobile (100) ;
dans lequel une liste de services changés est reçue par le serveur (200) à partir du terminal mobile (100), et le serveur (200) est configuré pour fournir des services prédéterminés au terminal mobile (100) et à au moins un dispositif externe (10a, 10b, 10c) sur la base de la liste de services changés.

9. Serveur (200) selon la revendication 8, dans lequel l'organe de commande est en outre configuré pour transférer sélectivement différents services générés aux différents dispositifs externes (10a, 10b, 10c) connectés au terminal mobile (100) sur la base des informations de contexte.

10. Serveur (200) selon la revendication 8 ou 9, dans lequel la base de données (230) est en outre configurée pour mémoriser des informations combinées d'émotions et d'emplacement de l'utilisateur et des informations de temps auquel les informations de contexte sont acquises dans un ensemble et pour mapper l'ensemble avec les thèmes correspondants, les informations d'émotions étant déduites d'une expression faciale de l'utilisateur acquise par une caméra.

11. Procédé de commande d'un terminal mobile (100), le procédé comprenant :
l'acquisition (S110), par l'intermédiaire d'une unité d'acquisition d'informations de contexte du terminal mobile (100), d'informations de contexte comprenant des informations de contexte spécifique à l'utilisateur au sujet d'un utilisateur du terminal mobile (100) ;
la transmission (S120), par l'intermédiaire d'une unité de communication sans fil (110) du terminal mobile (100), des informations de contexte acquises à un serveur du cloud (200) ;
la réception (S130) à partir du serveur du cloud (200), par l'intermédiaire d'un organe de commande (180) du terminal mobile (100), d'un service généré par le serveur du cloud (200) en réponse aux informations de contexte spécifique à l'utilisateur ;
la transmission, par l'intermédiaire de l'unité de communication sans fil (110), d'une liste de services changés au serveur du cloud (200) ; et
la commande de services prédéterminés à fournir au terminal mobile (100) et à au moins un dispositif externe (10a, 10b, 10c) en réponse à la réception d'une entrée changeant au moins un élément de services inclus dans la liste de services sur la base de la liste de services changés.

12. Procédé selon la revendication 11, comprenant en outre
la formation, par l'intermédiaire de l'unité de communication sans fil (110), d'un réseau avec au moins un dispositif externe (10a, 10b, 10c) ; et
la surveillance et la mémorisation des informations de contexte transférées par l'au moins un dispositif externe (10a, 10b, 10c) au serveur (200).

13. Procédé selon l'une quelconque des revendications 11 et 12, comprenant en outre :
la transmission au serveur (200) d'informations d'évaluation au sujet d'une satisfaction d'utilisateur ; et
la demande d'un service d'une priorité inférieure en fonction des informations d'évaluation.
